# EUROPEAN PATENT APPLICATION

(11) **EP 2 653 236 A1**
(43) Date of publication of application: **23.10.2013**
(21) Application number: 12002668.7
(22) Date of filing: 17.04.2012
(51) Int. Cl.: B05C 5/02, F16K 31/122

(54) **Device and method for a controlled discharge of a fluid**

(71) Applicant: Linde Aktiengesellschaft, 80331 Munich (DE)
(72) Inventor: Malas, Akin, 85757 Karlsfeld (DE)
(74) Representative: Gellner, Bernd

(57) **Abstract**

A device (1) for a controlled discharge of a main fluid according to the present invention comprises at least one passageway (13) for the main fluid. The at least one passageway comprises at least one inlet (11) for the main fluid and at least one outlet (15) for the main fluid. The at least one outlet for the main fluid can be blocked by a movable block (16) further comprised in the device, the movable block operable to alternate between a first and a second position. When situated at the second position, the movable block closes the at least one outlet for the main fluid. The device according to the present invention further comprises a least one inlet (12) for a drive fluid. Responsive to a drive fluid supply through the at least one inlet for the drive fluid, the movable block moves from the first position towards the second position. A method of operating a main fluid's discharge from a passageway comprises supplying a drive fluid so as to press the movable block towards the second position.

## Description

The invention concerns a device for a controlled discharge of a main fluid, an apparatus for spraying a main fluid, the apparatus including said device, and a method for operating a main fluid's discharge.

### State of the art

In the process of producing metal strips or foils, the material is passed through rolling mills which provide for the thickness and the final quality of the fabricated product. Therein, cooling of the rolls is required to avoid overheating of the equipment and/or of used lubricants.

Water based emulsions and kerosene have been used in the past, to serve both as a coolant and as a lubricant in the process of rolling metal (such as aluminium). However, both of these materials turned out to have certain disadvantages associated therewith. To overcome these drawbacks, utilisation of cryogenic roll cooling devices has been proposed in patent application GB 2466458A. According to the invention disclosed therein, a cryogenic fluid is directed to zones on the surface of the mill rolls. In particular, liquid nitrogen (LIN), liquid Argon (LAR), Liquid Air and liquid helium are known as cryogenic fluids in this context.

Conventionally, nozzles are used to spray the fluid on a surface. To provide for an efficient control of the flow and for a smooth distribution of the fluid, these nozzles have many internal components. As a consequence, they use to be rather heavy and complex, causing energy losses during their operation and susceptibility to failure when their operating time increases.

As alternative prior art fluid applicators, pulsing cryogenic solenoid valves are employed. These valves are operated by a magnetic field, which alternately activates and releases metal pins in the middle of the valve, in order to block or permit the liquid flow, respectively. However, the valves require a rather elaborated and susceptible construction. Moreover, the necessarily included metal both causes increased temperature losses and inertia.

The present invention aims at providing a lightweight device for applying fluid, the device having an increased lifetime and providing an accurate control of the fluid application. The invention further aims at providing a precise and easily operated method of discharging fluid.

### Disclosure of the invention

The present invention relates to a device of claim 1 for a controlled fluid discharge, to an apparatus of claim 7 for spraying a fluid and to a method of claim 10 for operating a fluid's discharge. Preferred embodiments are disclosed in the dependent claims and the following description.

The device for a controlled discharge of a main fluid according to the present invention comprises at least one passageway for the main fluid. The at least one passageway comprises at least one inlet for the main fluid and at least one outlet for the main fluid. The at least one outlet for the main fluid can be blocked by a movable block further comprised in the device, the movable block operable to alternate between a first and a second position. When situated at the second position, the movable block closes the at least one outlet for the main fluid.

The device according to the present invention further comprises a least one inlet for a drive fluid. Responsive to a drive fluid supply through the at least one inlet for the drive fluid, the movable block moves from the first position towards the second position.

The device of the present invention can be used as a valve-nozzle combination, especially allowing a precise pulsing discharge of the main fluid. The main fluid's emission can be stopped at accurate times by promptly supplying the drive fluid, thus causing the moving block to move to the second position, where it closes the passageway. Thereby, a reliable and immediate effect of the drive fluid's supply can be achieved.

In a preferred embodiment of the present invention, by releasing the drive fluid's pressure or by sucking drive fluid through the at least one inlet for the drive fluid, the movable block can be caused to move from the second position towards the first position. Thereby, the passageway can be opened, allowing discharge of the main fluid.

The passageway may thus be each of closed and opened by controlling the drive fluid. When the device is connected to a corresponding supply, such as to a gas feed, the control thereof may be located remote from the device. Moreover, various devices according to the present invention may be connected to the same fluid supply and thus be simultaneously controlled, such as to produce a synchronised pulsing.

The device may comprise an extensible chamber for drive fluid, which may be at least partially bordered by the movable block. That is, depending on its direction, a movement of the movable block may cause the extensible chamber to extend up to a maximum size, or to contract to a minimum volume which, in some embodiments, may be even zero. The extensible chamber may inhibit that drive fluid escapes when being blown against the movable block, or it may at least significantly reduce the amount of escaping drive fluid. Thereby, the closed chamber may allow stopping further supply of the drive fluid to keep the movable block at the second position, thus saving both drive fluid and energy. When the movable block is operable to be moved responsive to suction of drive fluid, the chamber provides for an immediate effect of the suction and, thereby, reduces energy costs.

In a preferred embodiment, the device is configured such that the main fluid, when flowing through the passageway, pushes the movable block towards the first position. This may be achieved by the shapes of the passageway and the movable block being adjusted with respect to each other, at least in a region where the movable block enters the passageway when blocking it.

For instance, a portion of the passageway may partially run next to a surface area of the movable block, the surface area being located opposite to a surface (of the movable block) which may be impinged by the drive fluid. The pressure of the main fluid may thus engage the movable block at that surface area. Whenever the thus applied force caused by the pressure of the main fluid is stronger than the force exerted, by the drive fluid, towards the second position, the movable block will move towards the first position.

In this embodiment, the main fluid's pressure is utilised to open the passageway, or to open it further. In particular, a suction of the drive fluid, causing the movable block to relocate from the second to the first position, may be dispensable, or at least less force may be required for such suction. This may simplify the requirements to the supply feed of the drive fluid, thus increasing the device's utilisability.

Preferably, the movable block comprises at least one synthetic or organic polymer, such as plastic based on a semi-synthetically or a synthetically produced material. The movable block comprising such material provides the advantage that the movable block has small mass. Moving the movable block thus requires a small amount of energy only, as exerted in terms of the drive fluid's pressure and, in some embodiments, further by the main fluid's pressure. Moreover, the movable block including that material entails small heat losses. Particularly preferred is an embodiment where the movable block includes polytetrafluorethylen (PTFE), as this material provides of high chemical and physical resistance and small thermal conductivity.

In an embodiment where the movable block includes at least one organic polymer, the material is preferably stabilised by a carcass. This may be from metal such as steel. Thereby, the movable block may be supported such that it endures bending when it is pressed at the second position, recurrently over a long time period.

In a preferred embodiment, the device includes at least two intlets for the main fluid and at least one of the one or more inlet(s) for the drive fluid which are located on a same (common) surface of the device. The at least two inlets for the main fluid are preferably located at an outer perimeter of the surface, and the at least one inlet for the drive fluid is preferably located in a central region of the surface.

For instance, the surface may be apportionable into two regions, a convex inner one and an outer one surrounding the convex inner one, and such that the at least two inlets for the main fluid are located in the outer region and the at least one of the inlets for the drive fluid are located in the convex inner surface section.

For example, the at least one inlet for the drive fluid may be located between two of the inlets for the main fluid. Alternatively or additionally, when three or more inlets for the main fluid are comprised which geometrically lie on respective corners of a convex polygon on the device's surface, the at least one inlet for the drive fluid may be located in the inner area of the polygon.
These arrangements of the inlets allow an easy and symmetric construction of the device such that multiple passageways are controlled by a common movable block. For instance, when a main fluid discharge by spraying is desired, the presence of two or more passageways may improve the main fluid's dispersion and/or diffusion. By opening and closing two or more passageways by means of a common movable block (controlled by a drive fluid supply through the at least one inlet for the drive fluid), the synchonisation of a pulsed main fluid discharge may be improved. The control of the movable block, however, may be enhanced by the inlet for the drive fluid being located symmetrically with respect to the movable block. These arrangements may be realised when the inlet for the main fluid is located in a central region and the two or more inlets for the main fluid are located at an outer region of a device's surface.

In a preferred embodiment, the device of the present invention comprises a perforated plate which may serve to diffuse main fluid flowing therethrough. The perforated plate may be a faceplate of the device. It may cover a cavity partially bordered by the movable block, wherein the at least one passageway's outlet for the main fluid may be mouths to the cavity.

When the moving block is located at the first position, main fluid may exit the at least one passageway through the at least one outlet into the cavity. The at least one outlet for the main fluid may be arranged such that, within the cavity, the main fluid is directed towards the moving block's surface, which reflects the main fluid, redirecting it through the perforated plate. The fluid may thus be sprayed by the device.

The above described device, in each of its embodiments, may be included in an apparatus for discharging the main fluid, the apparatus including a supply for a main fluid attached to the device's at least one inlet for the main fluid, and a supply for a drive fluid attached to the device's at least one inlet for a drive fluid.

The apparatus may further include a computing unit (such as a programmable logic controller) or may be connected to such unit, which controls the drive fluid's supply, thus operating the device's pulsation.

It is preferred that the drive fluid is different from the main fluid, and that both fluids do not merge within the device.

The main fluid may be a cooling fluid. In a preferred embodiment, the main fluid is a cryogenic fluid, such as liquid nitrogen or liquid helium. However, other fluids may be used as well. The main fluid may therefore also be water, a water based emulsion, kerosene, a liquid lubricant such as oil or the like.

The drive fluid may be a gas, such as air or gaseous nitrogen. This provides the advantage that the apparatus is easy to maintain. However, the apparatus may also be installed and run with a liquid as the drive fluid, such as water except cooling medium has a lower operating temperature than the drive fluid's solidifaction temperature. This may provide a high precision of the movement of the moving block, as the liquid is incompressible.

In a preferred embodiment, the apparatus is included in a rolling mill for rolling a metal, such as aluminium.

The present invention further concerns a method for operating a main fluid's discharge from a passageway having at least one outlet, the at least one outlet being lockable by a movable block. The movable block is such that it releases the outlet when the movable block is located at a first position, and that it blocks the outlet when it is located at a second position. The method comprises the steps of supplying the main fluid into the passageway, discharging the main fluid through the at least one outlet and operating the movable block to move from the first position to the second position. Therein, operating the movable block to move from the first position to the second position includes supplying a drive fluid so as to press the movable block towards the second position.

The main fluid's discharge can thus be stopped easily and precisely by supplying the drive fluid. In a preferred embodiment, the method further comprises operating the movable block to move from the second position towards the first position. Thereby, the passageway is also opened by means of the drive fluid, to allow discharge of the main fluid. The step of such operating of the movable block may include releasing pressure of the drive fluid, thus allowing a pressure of the main fluid to push the movable block towards the first position. Alternatively or additionally, the step may comprise extracting drive fluid, so as to generate vacuum pulling the movable block towards the first position. The method thus allows for a precise and clean pulsing of the device, while at the same time minimising stress of the material.

Further details, embodiments and advantages become apparent from the enclosed drawings.
- Figure 1: shows an exemplary device of the present invention in an open state
- Figure 2: shows an exemplary device of the present invention in a closed state

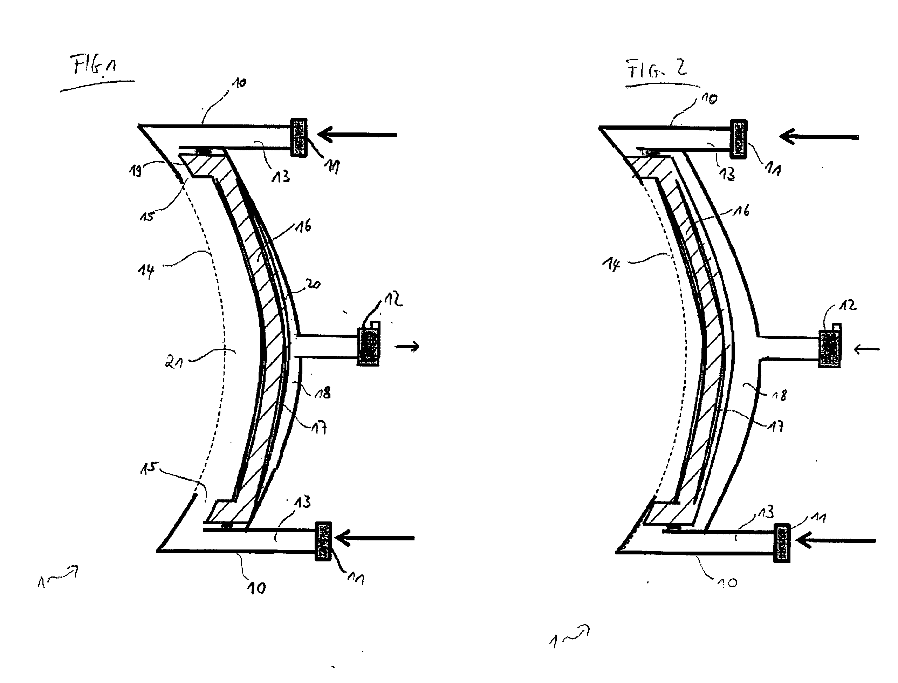

Figures 1 and 2 both depict an exemplary and particularly preferred embodiment of the present invention, in respective states. The device 1 includes a metal block 10 forming a jacket for the device. The metal block has two inlets 11 serving as an inlet for the main fluid to a respective passageway 13, and one inlet 12 for the drive fluid. At one side, the metal block is bordered by an optional perforated plate 14 including holes which serve to atomise the main fluid. When included in an apparatus such as a rolling mill, the perforated plate 14 may preferably face a work roll (not shown).

The devices further comprise a movable block 16 which may include a polymer (such as a PTFE material) and which includes a supporting carcass 17 stabilising the movable block. The movable block forms part of a wall of an extensible chamber 18 for drive fluid.

In Figure 1, the movable block is shown in a first position. In this state, the extensible chamber 18 has minimal size. The perforated plate 14 covers a cavity 21 which is partially bordered by the movable block 16. The outlets 15 for the main fluid are mouths to the cavity 21. When main fluid is provided, through the corresponding inlets 11, as indicated by the upmost and the lowermost arrows, the man fluid may flow through the passageway 13, through the outlets 15 for the main fluid into the cavity 21 and, after being partially reflected by the surface of the movable block, through the holes included in the perforated plate 14.

A part of the passageway runs next to a surface area 19 of the movable block 16. The surface area 19 is opposite to a movable block's surface 20 which form a wall of the extensible chamber and which may be impinged by the drive fluid supplied through inlet 12. Due to the shape of the passageway and the surface 19, the main fluid flowing through pushes the movable block towards the first position. In the state shown in Figure 1, the movable block is thus held in its (first) position, thus reducing the necessity of suction of drive fluid through the inlet 12 for drive fluid.

In Figure 2, the device 1 is shown in the state where the movable block 16 is located in the second position, thereby closing the passageways 13. The transition has been realised by a supply of drive fluid through the corresponding inlet 12, as indicated by the middle arrow. The extensible chamber 18 is expanded to its maximal volume. As no or little drive fluid pressing against the movable block 16 may escape, the drive fluid's pressure (applied the inlet 12) necessary to hold the movable block in the second position can be minimised.

### Reference signs used

- 1: device for a controlled discharge of a main fluid
- 10: metal block
- 11: inlets for the main fluid
- 12: inlet for the drive fluid
- 13: passageways for main fluid
- 14: perforated plate
- 15: outlet for the main fluid
- 16: movable block
- 17: carcass of the movable block
- 18: extensible chamber
- 19: surface area of the movable block pushed by flowing main fluid
- 20: surface of the movable block pushed by the drive fluid
- 21: cavity covered by the perforated plate

## Claims

1. Device (1) for a controlled discharge of a main fluid, the device comprising at least one passageway (13) having at least one inlet (11) for the main fluid and at least one outlet (15) for the main fluid,
the device further comprising a movable block (16) which is operable to alternate between a first position and a second position, the movable block closing the passageway when being located at the second position,
**characterised in that** the device further comprises at least one inlet (12) for a drive fluid,
wherein the movable block is operable to move, responsive to a drive fluid supply through the at least one inlet for the drive fluid, from the first position towards the second position.

2. Device according to claim 1, wherein the movable block is further operable to move, responsive to a release of drive fluid pressure or to suction of drive fluid through the at least one inlet for the drive fluid, from the second position towards the first position.

3. Device according to claim 1 or 2, wherein the movable block forms part of a wall of at least one extensible chamber (18), the size of which can be regulated by supplying and/or releasing drive fluid through the at least one inlet for the drive fluid.

4. Device according to one of the preceding claims, wherein the movable block is configured to be pressed, responsive and due to main fluid flowing through the at least one passageway, towards the first position.

5. Device according to one of the preceding claims, wherein the movable block comprises at least one polymer, preferably polytetrafluorethylene.

6. Device according to claim 5, wherein the movable block (16) further comprises a carcass (17) made from metal.

7. Device according to one of the preceding claims, including, at an outer perimeter of the device, at least two intlets for the main fluid and, in a central region of the device, preferably between the at least two intlets for the main fluid, at least one inlet for the drive fluid.

8. Device according to one of the preceding claims, further comprising a perforated plate (14) arranged such that main fluid flowing through the at least one passageway and exiting it through the at least one outlet for the main fluid is lead through and dispersed by the perforated plate.

9. Apparatus for discharging a main fluid, the apparatus comprising a supply for a main fluid, a supply for a drive fluid and a device according to one of the preceding claims,
wherein the at least one inlet for the main fluid is attached to the supply for the main fluid, and the at least one inlet for the drive fluid is attached to the supply for the drive fluid.

10. Apparatus according to claim 9, wherein the main fluid is a cooling fluid, preferably a cryogenic fluid, more preferably liquid nitrogen or liquid helium,
and/or wherein the drive fluid is a liquid or a gas, preferably gaseous nitrogen or compressed dry air.

11. Apparatus according to claim 9 or 10, further comprising a computer unit controlling a supply and/or discharge of drive fluid to/from the at least one inlet for the drive fluid.

12. Apparatus according to one of claims 9 to 11, wherein the apparatus is included in a rolling mill for rolling a metal, preferably aluminium.

13. Method of operating a main fluid's discharge from a passageway (13) having at least one outlet (15), the at least one outlet being lockable by a movable block (16) releasing the outlet when located at a first position and blocking the outlet when located at a second position;
the method comprising
supplying the main fluid into the passageway;
discharging the main fluid through the at least one outlet;
operating the movable block to move from the first position to the second position
**characterised in that**
operating the movable block to move from the first position to the second position includes supplying a drive fluid so as to press the movable block towards the second position.

14. Method according to claim 13, further comprising operating the movable block to move from the second position towards the first position.

15. Method according to claim 14, wherein operating the movable block to move from the second to the first position comprises
releasing pressure of the drive fluid, thus allowing a pressure of the main fluid to push the movable block towards the first position,
and/or extracting drive fluid so as to generate vacuum pulling the movable block towards the first position.
